# EUROPÄISCHE PATENTANMELDUNG

(11) **EP 1 557 907 A2**
(43) Veröffentlichungstag der Anmeldung: **27.07.2005**
(21) Anmeldenummer: 05000650.1
(22) Anmeldetag: 14.01.2005
(51) Int. Cl.: H01R 13/00

(54) **Datenspeichervorrichtung sowie Schreibgerät mit einer derartigen Datenspeichervorrichtung**

(30) Priorität: 21.01.2004 DE 202004000834 U
(71) Anmelder: h & m gutberlet gmbh, 90471 Nürnberg (DE)
(72) Erfinder: Gutberlet, Michael, 90471 Nürnberg (DE)
(74) Vertreter: Hofmann, Matthias, Dr.

(57) **Zusammenfassung**

Eine Datenspeichervorrichtung (1) hat ein Gehäuse (2) und eine steckbar ausgeführte Schnittstellen-Einrichtung (3) zur Anbindung an eine externe Datenverarbeitungseinrichtung. Die Schnittstellen-Einrichtung (3) ist relativ zum Gehäuse (2) zwischen einer Ruhestellung und einer Steckstellung verlagerbar. In der Ruhestellung ist die Schnittstellen-Einrichtung (3) im Gehäuse (2) geschützt untergebracht. In der Steckstellung ragt die Schnittstellen-Einrichtung (3) derart aus dem Gehäuse (2), dass sie an die Datenverarbeitungseinrichtung angesteckt werden kann. Es resultiert eine Datenspeichervorrichtung, bei der die Schnittstellen-Einrichtung (3) auch dann ohne zusätzliche Schutzkappe geschützt werden kann, wenn sie nicht an die externe Datenverarbeitungseinrichtung angebunden ist.

## Beschreibung

Die Erfindung betrifft eine Datenspeichervorrichtung nach dem Oberbegriff des Anspruches 1 sowie ein Schreibgerät mit einer derartigen Datenspeichervorrichtung nach Anspruch 9.

Eine gattungsgemäße Datenspeichervorrichtung ist durch offenkundige Vorbenutzung bekannt. Dort ist zum Schutz der Schnittstellen-Einrichtung dann, wenn diese nicht an die externe Datenverarbeitungseinrichtung angebunden ist, eine Schutzkappe vorgesehen. Eine derartige Schutzkappe kann leicht verloren gehen. Zudem erfordert die Herstellung der Schutzkappe einen nicht unbeträchtlichen Aufwand. Die Schutzkappe schränkt außerdem den Designspielraum bei der Datenspeichervorrichtung ein. Ein Schreibgerät mit einer Schnittstellen-Einrichtung ist bekannt aus der DE 202 09 529 U1.

Der Erfindung liegt die Aufgabe zu Grunde, eine Datenspeichervorrichtung der eingangs genannten Art derart weiterzubilden, dass die Schnittstellen-Einrichtung auch ohne zusätzliche Schutzkappe dann, wenn sie nicht an die externe Datenverarbeitungseinrichtung angebunden ist, geschützt werden kann.

Diese Aufgabe ist erfindungsgemäß gelöst durch eine Datenspeichervorrichtung mit den im Kennzeichnungsteil des Anspruches 1 angegebenen Merkmalen.

Die Verlagerbarkeit der Schnittstellen-Einrichtung relativ zum Gehäuse bietet der Schnittstellen-Einrichtung in der Ruhestellung auch ohne zusätzliche Schutzkappe ausreichenden Schutz. Auf eine zusätzliche Schutzkappe kann verzichtet werden. Dies verringert den Herstellungsaufwand und führt zu einem erhöhten Gestaltungsspielraum bei der Formgebung der Datenspeichervorrichtung.

Eine lineare Verlagerbarkeit nach Anspruch 2 lässt sich konstruktiv einfach realisieren.

Eine Drehbarkeit nach Anspruch 3 reduziert die Gefahr einer unerwünschten Verlagerungsbewegung.

Haltemittel nach Anspruch 4 erlauben eine definierte Umstellung der Schnittstellen-Einrichtung zwischen der Ruhe- und der Steckstellung.

Eine Feder nach Anspruch 5 ist ein besonders kostengünstig ausführbares Haltemittel.

Eine Rasteinrichtung nach Anspruch 6 stellt ein sicheres Haltemittel dar. Bei der Gestaltung der Rasteinrichtung kann auf Lösungen zurückgegriffen werden, die aus dem Bereich der Kugelschreiber bereits bekannt sind.

Ein Haltemittel nach Anspruch 7 ist eine elegante Ergänzung zur Kulissenführung.

Schnittstelleneinrichtungen nach Anspruch 8 gewährleisten eine Kompatibilität der Datenspeichervorrichtung mit derzeit gängiger Hardware, z. B. einem PC, einem Notebook, einem Laptop oder einem digitalen Organizer.

Eine weitere Aufgabe der Erfindung ist die Weiterbildung eines Schreibgerätes mit einer Schnittstellen-Einrichtung derart, dass auf eine Schutzabdeckung der Schnittstellen-Einrichtung verzichtet werden kann.

Diese Aufgabe ist erfindungsgemäß gelöst durch ein Schreibgerät nach Anspruch 9. Ein derartiges Schreibgerät weist die Vorteile auf, die vorstehend unter Bezugnahme auf die Datenspeichervorrichtung diskutiert wurden.

Ausführungsbeispiele der Erfindung werden nachfolgend anhand der Zeichnung näher erläutert. In dieser zeigen:
- Fig. 1: perspektivisch eine erste Ausführungsform einer Datenspeichervorrichtung mit einer Schnittstellen-Einrichtung in Steckstellung;
- Fig. 2: die Datenspeichervorrichtung nach Fig. 1 mit der Schnittstellen-Einrichtung in Ruhestellung;
- Fig. 3: perspektivisch eine weitere Ausführungsform einer Datenspeichervorrichtung mit einer Schnittstellen-Einrichtung in Steckstellung; und
- Fig. 4: die Datenspeichervorrichtung nach Fig. 3 mit der Schnittstellen-Einrichtung in Ruhestellung.

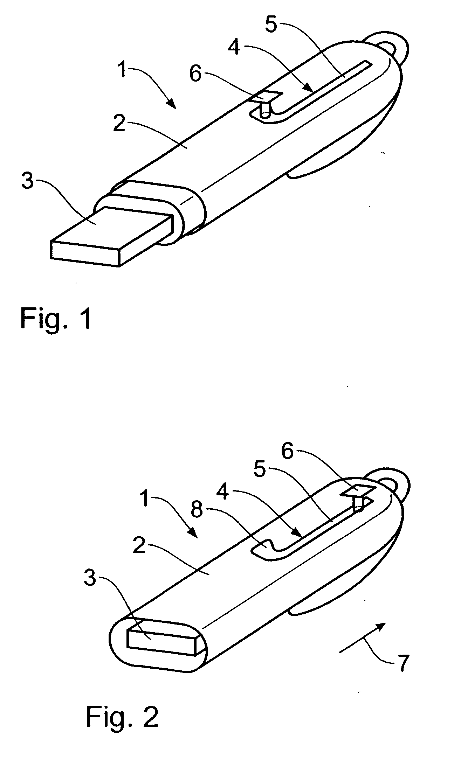

Die Fig. 1 und 2 zeigen eine erste Ausführungsform einer Datenspeichervorrichtung 1 in perspektivischer Ansicht. Die Datenspeichervorrichtung 1 weist ein Gehäuse 2 und eine Schnittstellen-Einrichtung 3 zur Anbindung der Datenspeichervorrichtung 1 an eine nicht dargestellte externe Datenverarbeitungseinrichtung auf. Die Schnittstellen-Einrichtung 3 ist als USB-Stecker ausgeführt. Fig. 1 zeigt die Datenspeichervorrichtung 1 in einer Steckstellung der Schnittstellen-Einrichtung 3. In der Steckstellung kann die Schnittstellen-Einrichtung 3 in eine entsprechende USB-Buchse der externen Datenverarbeitungseinrichtung eingesteckt werden.

Fig. 2 zeigt die Datenspeichervorrichtung 1 in einer Ruhestellung der Schnittstellen-Einrichtung 3. In der Ruhestellung ist die Schnittstellen-Einrichtung 3 im Wesentlichen linear zum Gehäuse 2 derart in dieses eingeschoben, dass sie im Gehäuse 2 geschützt untergebracht ist.

Zwischen der Steckstellung und der Ruhestellung ist die Schnittstellen-Einrichtung 3 über eine Kulissenführung 4 geführt verlagerbar. Die Kulissenführung 4 weist eine im Gehäuse 2 ausgeführte Kulisse 5 und einen Führungsstift 6 auf.

In der durch einen Pfeil 7 dargestellten Einschieberichtung der Schnittstellen-Einrichtung 3 in das Gehäuse 2 ist die Schnittstellen-Einrichtung 3 relativ zum Gehäuse 2 über eine nicht dargestellte Feder vorgespannt. Diese Feder stellt ein Haltemittel dar, welches die Schnittstellen-Einrichtung 3 relativ zum Gehäuse 2 einerseits in der Ruhestellung und andererseits in der Steckstellung hält. Damit die Haltefunktion dieser Feder auch in der Steckstellung gewährleistet ist, ist die Kulisse 5 am steckstellungsseitigen Ende als Halteabschnitt 8 ausgeführt, in dem der Führungsstift 6 mittels der Vorspannkraft der Feder gehalten wird.

Zum Umstellen der Schnittstellen-Einrichtung 3 von der Steckstellung in die Ruhestellung wird der Führungsstift 6 entgegen der Einschiebrichtung 7 der Kulisse 5 folgend solange betätigt, bis er den Halteabschnitt 8 verlassen hat und unter dem Einfluss der Feder in Einschiebrichtung 7 bis zur in Fig. 2 gezeigten Endstellung verlagert wird. Die mit dem Führungsstift 6 verbundene Schnittstellen-Einrichtung 3 wird hierbei in die Ruhestellung gemäß Fig. 2 verlagert. Zum Umstellen der Schnittstellen-Einrichtung 3 von der Ruhestellung in die Steckstellung wird der Führungsstift 6 entgegen der Vorspannkraft der Feder und entgegen der Einschiebrichtung 7 solange betätigt, bis er, der Kulisse 5 folgend, im Halteabschnitt 8 zu liegen kommt. Hierbei wird die Schnittstellen-Einrichtung 3 in die Steckstellung verlagert.

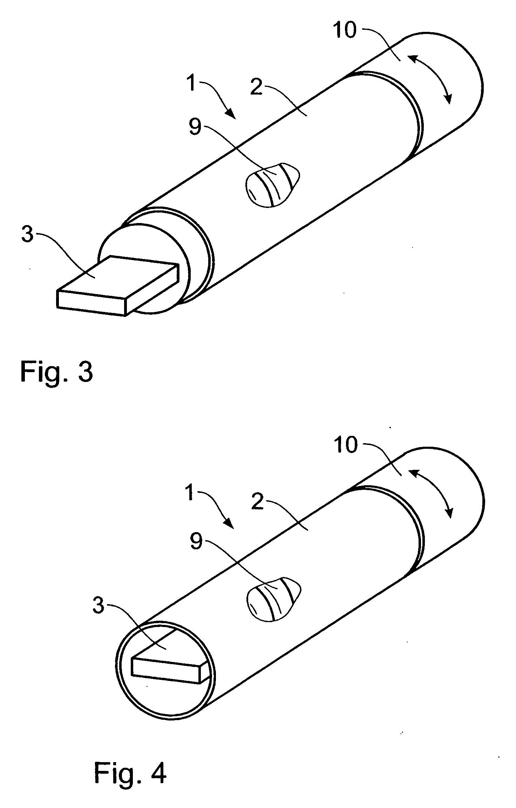

Eine weitere Ausführungsform einer Datenspeichervorrichtung ist in den Fig. 3 und 4 dargestellt. Komponenten, die denjenigen entsprechen, die vorstehend unter Bezugnahme auf die Fig. 1 und 2 schon diskutiert wurden, tragen die gleichen Bezugszeichen und werden nicht nochmals im Einzelnen erläutert.

Die Schnittstellen-Einrichtung 3 ist bei der Ausführung nach den Fig. 3 und 4 relativ zum Gehäuse 2 drehbar. Diese Drehbewegung ist über ein in einem gebrochenen Ausschnitt dargestelltes Schraubengewinde 9 geführt, wobei die Schnittstellen-Einrichtung 3 ein Außengewinde und das Gehäuse 2 ein hierzu komplementäres Innengewinde aufweist. Über das Schraubengewinde 9 ist die Drehbewegung der Schnittstellen-Einrichtung 3 relativ zum Gehäuse 2 derart geführt, dass im Zuge der Drehbewegung eine Verlagerung der Schnittstellen-Einrichtung 3 relativ zum Gehäuse 2 zwischen der in Fig. 4 dargestellten Ruhestellung und der in Fig. 3 dargestellten Steckstellung stattfindet. Dabei ist eine nicht dargestellte Feder vorgesehen, welche die Schnittstellen-Einrichtung 3 in der Ruhestellung vorspannt. Im Bereich der Steckstellung weist das Schraubengewinde 9 einen Halteabschnitt ähnlich dem Haltabschnitt 8 der Kulisse 5 bei der Ausführung nach den Fig. 1 und 2 auf, sodass unter der Vorspannung der Feder die Schnittstellen-Einrichtung 3 in der Steckstellung gehalten ist.

Zur Betätigung der Drehbewegung weist die Ausführung nach den Fig. 3 und 4 einen Drehgriff 10 auf, der starr mit der Schnittstellen-Einrichtung 3 und drehbar zum Gehäuse 2 ausgeführt ist.

Auch andere Mechaniken zur Umstellung der Schnittstellen-Einrichtung zwischen der Ruhestellung und der Steckstellung sind möglich. Als weitere, nicht dargestellte Ausführungsform einer derartigen Umstellungsmechanik kann z. B. eine Rasteinrichtung, insbesondere eine Kugelschreiber-Rastmechanik vorgesehen sein.

Die Schnittstellen-Einrichtung 3 muss nicht zwingend als USB-Stecker ausgeführt sein. Es ist auch eine Ausführung als Firewire-Stecker oder eine einem anderen Standard entsprechende Ausführung denkbar. Die Schnittstellen-Einrichtung kann auch als Buchse ausgeführt sein.

Die Datenspeichervorrichtung 1 kann als Teil eines nicht dargestellten Schreibgerätes gestaltet sein.

Bei einer nicht dargestellten Variante ist die Datenspeichervorrichtung nach Art eines Lippenstiftes gestaltet und weist dabei eine Mechanik zur Umstellung der Schnittstellen-Einrichtung 3 zwischen der Ruhestellung und der Steckstellung insbesondere nach den Fig. 3 und 4 auf. Die Schnittstellen-Einrichtung 3 kann bei dieser Lippenstift-Ausführung mit einer Zierkappe versehen sein, um die Anmutung eines Lippenstiftes zu vervollständigen. Diese Zierkappe hat eine rein ästhetische Funktion, erfüllt also keinen Schutzzweck für die Schnittstellen-Einrichtung 3.

## Patentansprüche

1. Datenspeichervorrichtung mit einem Gehäuse (2) und mit einer steckbar ausgeführten Schnittstellen-Einrichtung (3) zur Anbindung an eine externe Datenverarbeitungseinrichtung, **dadurch gekennzeichnet, dass** die Schnittstellen-Einrichtung (3) relativ zum Gehäuse (2) zwischen einer Ruhestellung und einer Steckstellung derart verlagerbar ist, dass die Schnittstellen-Einrichtung (3)
- in der Ruhestellung im Gehäuse (2) geschützt untergebracht ist und
- in der Steckstellung derart aus dem Gehäuse (2) ragt, dass sie an die Datenverarbeitungseinrichtung angesteckt werden kann.

2. Datenspeichervorrichtung nach Anspruch 1, **dadurch gekennzeichnet, dass** die Schnittstellen-Einrichtung (3) relativ zum Gehäuse (2) im Wesentlichen linear zwischen der Ruhestellung und der Steckstellung verlagerbar ist.

3. Datenspeichervorrichtung nach Anspruch 1, **dadurch gekennzeichnet, dass** die Schnittstellen-Einrichtung (3) relativ zum Gehäuse (2) drehbar ist, wobei diese Drehbewegung über ein Schraubengewinde (9) derart geführt ist, dass im Zuge der Drehbewegung eine Verlagerung der Schnittstellen-Einrichtung (3) zum Gehäuse (2) zwischen der Ruhestellung und der Steckstellung stattfindet.

4. Datenspeichervorrichtung nach einem der Ansprüche 1 bis 3, **dadurch gekennzeichnet, dass** lösbare Haltemittel (8) vorgesehen sind, die die Schnittstellen-Einrichtung (3) relativ zum Gehäuse (2) in der Ruhestellung bzw. der Steckstellung halten.

5. Datenspeichervorrichtung nach Anspruch 4, **gekennzeichnet durch** eine Feder, welche die Schnittstellen-Einrichtung (3) in der Ruhe- bzw. der Steckstellung vorspannt, als Haltemittel.

6. Datenspeichervorrichtung nach Anspruch 4 oder 5, **gekennzeichnet durch** eine Rasteinrichtung, welche die Schnittstellen-Einrichtung (3) in der Ruhe- bzw. der Steckstellung lösbar verriegelt, als Haltemittel.

7. Datenspeichervorrichtung nach einem der Ansprüche 4 bis 6, **dadurch gekennzeichnet, dass** das Haltemittel (8) als Endabschnitt einer Kulissenführung (4) der Verlagerungsbewegung der Schnittstellen-Einrichtung (3) relativ zum Gehäuse (2) ausgeführt ist.

8. Datenspeichervorrichtung nach einem der Ansprüche 1 bis 7, **dadurch gekennzeichnet, dass** die Schnittstellen-Einrichtung (3) nach Art eines USB- oder Firewire-Steckers ausgebildet ist.

9. Schreibgerät mit einer Datenspeichervorrichtung nach einem der Ansprüche 1 bis 8.
